# EUROPÄISCHE PATENTSCHRIFT

(11) **EP 1 868 852 B1**
(45) Veröffentlichungstag und Bekanntmachung des Hinweises auf die Patenterteilung: **26.06.2013**
(21) Anmeldenummer: 06724844.3
(22) Anmeldetag: 15.02.2006
(51) Int. Cl.: B60R 21/01, B60T 8/17, B60T 8/88, B62D 15/02, B60W 40/10

(54) **VERFAHREN UND VORRICHTUNG ZUR STABILISIERUNG EINES FAHRZEUGS NACH EINER KOLLISION**
METHOD AND DEVICE FOR STABILISING A VEHICLE AFTER A COLLISION
PROCEDE ET DISPOSITIF POUR STABILISER UN VEHICULE APRES UNE COLLISION

(30) Priorität: 07.04.2005 DE 102005016009
(43) Veröffentlichungstag der Anmeldung: 26.12.2007
(73) Patentinhaber: ROBERT BOSCH GMBH, 70442 Stuttgart (DE)
(72) Erfinder: EWERHART, Frank, 74189 Weinsberg (DE); MARCHTHALER, Reiner, 73333 Gingen (DE); KRÖNINGER, Mario, 77815 Buehl (DE); STABREY, Stephan, 70469 Stuttgart (DE)
(86) Internationale Anmeldenummer: PCT/EP2006/050949
(87) Internationale Veröffentlichungsnummer: WO 2006/106009

(56) Entgegenhaltungen:
- EP-A- 1 215 097
- DE-A1- 10 131 198

## Beschreibung

Die Erfindung betrifft eine Vorrichtung zum Stabilisieren eines Fahrzeugs nach einer Kollision gemäß dem Oberbegriff des Patentanspruchs 1, sowie ein entsprechendes Verfahren gemäß dem Oberbegriff des Patentanspruchs 8.

Aus dem Stand der Technik bekannte Fahrzeug-Stabilisierungssysteme, wie z.B. ESP, regeln meist die Gierrate und/oder den Schwimmwinkel des Fahrzeugs. Bei einer zu hohen Regelabweichung dieser Regelgrößen von ihren Sollwerten greift die Regelung durch automatische, radindividuelle Bremseingriffe oder mittels eines aktiven Lenksystems in die Fahrzeugbewegung ein, um das Fahrzeug zu stabilisieren. Dabei besteht das Regelungsziel darin, die tatsächliche Fahrzeugbewegung an eine durch den Lenkradwinkel vorgegebene Soll-Fahrzeugbewegung anzugleichen. Bei der Ermittlung der Bremseingriffe wird darüber hinaus das Ziel verfolgt, das Fahrzeug möglichst wenig zu verzögern, da dies vom Fahrer als störend empfunden werden kann.

Bekannte Fahrdynamikregelungen unterstützen den Fahrer im fahrdynamischen Grenzbereich, wenn das Fahrzeug aufgrund der Begrenzung der maximal von den Rädern übertragbaren Querkräfte über- oder untersteuert. Im Falle einer Kollision stoßen die bekannten Systeme jedoch an ihre Grenzen. Besonders kritisch sind dabei versetzte Heckkollisionen oder versetzte Seitenkollisionen, bei denen ein großes Giermoment auf das Fahrzeug ausgeübt und das Fahrzeug schnell in Rotation versetzt wird. Anders als bei Frontalkollisionen wird die Fahrzeuggeschwindigkeit dabei nicht zwangsläufig verringert, so dass sich das Fahrzeug unter Umständen mit hoher Geschwindigkeit weiter bewegt. Da insbesondere ungeübte Fahrer oftmals falsch oder zu spät auf die Kollision reagieren und ungeeignete Gegenmaßnahmen, wie z.B. zu starkes Gegenlenken, zu schwaches Bremsen, etc., ergreifen, gerät das Fahrzeug unter Umständen völlig außer Kontrolle und es kann zu Folgeunfällen kommen, die aufgrund der hohen Geschwindigkeit schwere Folgen haben können.

Herkömmliche Fahrdynamikregelungssysteme greifen in einer solchen Situation zwar in den Fahrbetrieb ein, sind jedoch nicht in der Lage, das Fahrzeug ausreichend schnell und in optimaler Weise zu stabilisieren, da der vom Fahrer vorgegebene Lenkwinkel - der möglicherweise im Affekt der Kollision entstanden und hinsichtlich der Stabilisierung ungeeignet ist - als Grundlage für die Gierraten- bzw. Schwimmwinkelregelung herangezogen wird. Das führt dazu, dass der Regler einer nicht optimalen Sollvorgabe folgt.

EP 1 215 097 A beschreibt ein solches System gemäß dem Oberbegriff des Anspruchs 1.

Es ist daher die Aufgabe der vorliegenden Erfindung, eine Vorrichtung sowie ein Verfahren zum Stabilisieren eines Fahrzeugs zu schaffen, mit deren Hilfe das Fahrzeug nach einer Kollision wirkungsvoll stabilisiert und gleichzeitig deutlich verzögert wird, um die Gefahr und Schwere von potenziellen Folgeunfällen zu reduzieren.

Gelöst wird diese Aufgabe gemäß der Erfindung durch die im Patentanspruch 1 sowie im Patentanspruch 8 angegebenen Merkmale. Weitere Ausgestaltungen der Erfindung sind Gegenstand von Unteransprüchen.

Ein wesentlicher Gedanke der Erfindung besteht darin, den Fahrzustand des Fahrzeugs in Bezug auf das Auftreten einer Kollision sensorisch zu überwachen und im Falle einer erkannten Kollision eine die Fahrzeugbewegung beschreibende Größe (Fahrzeugbewegungsgröße), wie z.B. die Gierrate, den Schwimmwinkel oder die Querbeschleunigung des Fahrzeugs auf einen Sollwert zu regeln, der wenigstens teilweise unabhängig vom Lenkwunsch des Fahrers ist. Dies hat den wesentlichen Vorteil, dass im Kollisionsfall die Auswirkungen einer Schreckreaktion des Fahrers auf die Regelung reduziert werden kann. Das Fahrzeug kann somit wesentlich wirksamer und schneller stabilisiert werden.

Der Sollwert der Regelung kann auf unterschiedliche Weise bestimmt werden: Gemäß einer ersten Ausführungsform der Erfindung wird als Sollwert ein unmittelbar vor der Kollision gemessener Istwert, wie z.B. die unmittelbar vor der Kollision vorliegende Ist-Gierrate verwendet. Bewegt sich das Fahrzeug zum Zeitpunkt der Kollision durch eine Kurve, wird die Fahrzeugbewegung auch nach der Kollision entsprechend dieser Kurve geregelt.

Gemäß einer speziellen Ausführungsform der Erfindung wird eine Soll-Gierrate aus einer auf Basis des aktuellen Fahrerlenkwinkels berechneten Gierrate und der unmittelbar vor der Kollision gemessenen Gierrate berechnet.

Gemäß einer anderen Ausführungsform der Erfindung ist ein Fahrspurerkennungssystem vorgesehen, das z.B. mittels einer Videokamera die Umgebung des Fahrzeugs aufnimmt und aus den Bilddaten eine Information über den Fahrspurverlauf extrahiert. Die Berechnung des Sollwerts erfolgt in diesem Fall auf Grundlage der Information über den Fahrspurverlauf.

Wahlweise kann auch ein System vorgesehen sein, mit dem die Trajektorien (Bewegungsbahnen) anderer Fahrzeuge z.B. mit dem Radarsensor eines ACC-Systems bestimmt werden. In diesem Fall kann der Sollwert auf Grundlage der Trajektorien der anderen Fahrzeuge berechnet werden. Dadurch wird erreicht, dass das verunfallte Fahrzeug auf die Bewegungsbahn anderer Fahrzeuge ausgerichtet wird.

Gemäß einer anderen Ausführungsform der Erfindung wird der Sollwert aus den Daten eines Fahrzeug-Navigationssystem berechnet. Wenn aus einer digitalen Karte der Fahrbahnverlauf und die aktuelle Position des Fahrzeugs bekannt sind, kann z.B. eine Sollgierrate bestimmt werden, die das Fahrzeug aufweisen müsste, um dem Fahrbahnverlauf zu folgen.

Gemäß einer weiteren Ausprägung der Erfindung wird das Fahrzeug durch die Regelungseingriffe nach der Kollision so ausgerichtet, dass die Quergeschwindigkeit des Fahrzeugs betragsmäßig reduziert wird. Auf diese Weise wird die Schwere einer potenziellen, für die Insassen besonders gefährlichen Seitenkollision verringert.

Das Fahrzeug wird im Kollisionsfall vorzugsweise nicht nur stabilisiert, sondern auch aktiv abgebremst. Die Fahrzeuglängsgeschwindigkeit kann dabei bis zu einem vorgegebenen Wert oder bis zum Stillstand des Fahrzeugs reduziert werden.

Die bei einer Kollision gemessenen Gierraten können die bei normalem Fahrbetrieb auftretenden Gierraten bei weitem übersteigen. Bekannte Fahrdynamik-Regelungssysteme führen üblicherweise eine Plausibilitätsprüfung der Sensorsignale durch, um fehlerhafte Sensorsignale zu erkennen und Fehlreaktionen des Systems zu vermeiden. Dabei werden hohe Gierraten oder schnelle Gierratenänderungen üblicherweise ignoriert und als Fehlersignale betrachtet. Um dies im Kollisionsfall zu vermeiden, wird vorgeschlagen, den Plausibilitätsbereich für das Signal des Gierratensensors im Kollisionsfall zu erweitern und somit auch sehr hohe Gierraten oder Gierratenänderungen als plausibel zu betrachten.

Eine Kollision kann im Grunde mittels jeder geeigneten Sensorik, wie z.B. mittels Drucksensoren oder Beschleunigungssensoren, die an geeigneter Stelle im Fahrzeug integriert sind, erkannt werden. Aufbau der Sensoren und Ort der Anbringung sind aus dem Stand der Technik hinreichend bekannt. Gemäß einer bevorzugten Ausführungsform der Erfindung werden die Sensoren eines Airbag-Systems zum Erkennen eines Kollisionsereignis herangezogen. Dies kann besonders kostengünstig realisiert werden, da keine zusätzlichen Sensoren benötigt werden.

Bei einer Anordnung mehrerer Aufprallsensoren im Fahrzeug kann insbesondere der Auftreffort und gegebenenfalls auch der Winkel des Kollisionsobjekts zum eigenen Fahrzeug genauer bestimmt werden. Daraus kann eine Information über Stärke der erzwungenen Gierbewegung des eigenen Fahrzeugs abgeleitet werden. Diese Werte können gemäß der Erfindung wiederum dazu genutzt werden, die vom Gierratensensor gemessene Gierraten zu verifizieren. Dadurch kann die Stärke des erforderlichen Regeleingriffs genauer und sicherer bestimmt werden.

Die Erfindung wird nachstehend anhand der beigefügten Zeichnungen beispielhaft näher erläutert. Es zeigen:
Fig. 1 eine schematische Darstellung eines Fahrdynamikregelungssystems, das zusätzlich auf Signale von Airbag-Sensoren zugreift;
Fig. 2 eine Darstellung eines Fahrzeugs in seiner Fahrspur;
Fig. 3 ein Flussdiagramm zur Darstellung der wesentlichen Verfahrensschritte zur Stabilisierung eines Fahrzeugs nach einer Kollision.

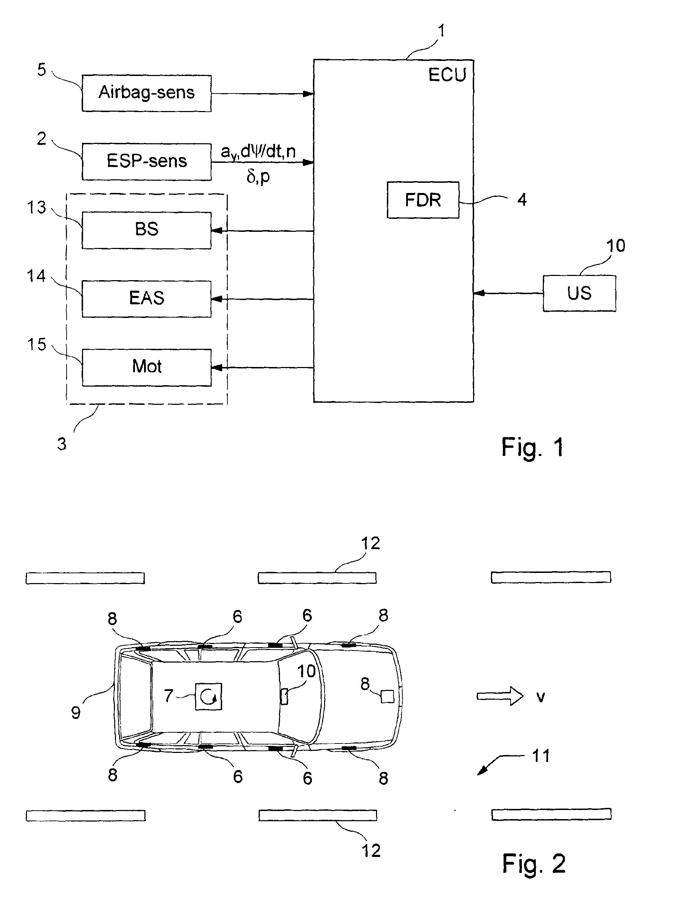

Fig. 1 zeigt eine schematische Darstellung eines Stabilisierungssystems 1-5, das dazu ausgelegt ist, das Fahrzeug nach einer Kollision wenigstens teilweise abzubremsen und insbesondere eine durch die Kollision verursachte Gierbewegung zu reduzieren.

Das Stabilisierungssystem 1-5 umfasst eine Sensorik 2 zur Aufnahme verschiedener Fahrzustandsgrößen, aus denen das Istverhalten des Fahrzeugs ermittelt wird. Die Sensorik 2 umfasst insbesondere einen Querbeschleunigungssensor, einen Gierratensensor, einen Bremsdrucksensor, Raddrehzahlsensoren und einen Lenkradwinkelsensor. Sämtliche Sensoren des Systems sind dabei in Block 2 zusammengefasst. Im Falle eines Fahrzeugs mit Fahrdynamikregelung (z.B. ESP) können die Sensoren der Fahrdynamikregelung genutzt werden.

Das Stabilisierungssystem 1-5 umfasst ferner ein Steuergerät 1, in dem ein Regelalgorithmus 4 (FDR) hinterlegt ist, sowie mehrere Aktuatoren 3, mit denen das Stabilisierungssystem in den Fahrbetrieb eingreifen kann. Im vorliegenden Ausführungsbeispiel besteht die Möglichkeit, mittels des Bremssystems (13), einer aktiven Lenkung (14) und/oder durch Beeinflussung der Motorsteuerung (15) in den Fahrbetrieb einzugreifen, um das Fahrzeug zu stabilisieren bzw. zu verzögern.

Für die Kollisionserkennung ist eine mit dem Steuergerät 4 verbundene Sensorik 5 vorgesehen, die mehrere Druck- und/oder Beschleunigungssensoren 6 bzw. 8 umfasst (siehe Fig. 2). Bei Fahrzeugen mit Airbag-System kann die bereits vorhandene Sensorik des Airbag-Systems genutzt werden.

Das Bezugszeichen 10 bezeichnet eine Umfeldsensorik, wie z.B. ein Fahrspurerkennungssystem, die Daten über den Fahrbahnverlauf bereitstellt. Diese Daten können zur Berechnung eines Sollwerts, wie z.B. einer Soll-Gierrate dψₛₒₗₗ/dt, für den Regeleingriff genutzt werden. Sämtliche der vorstehend genannten Komponenten stehen mit dem Steuergerät 1 in Kommunikationsverbindung.

Bei der Umfeldsensorik 10 kann es sich alternativ auch um einen von ACC-Systemen bekannten Radar-Sensor handeln, mit dem die vorausfahrenden Fahrzeuge erkannt werden können. Aus diesen Daten lassen sich die Trajektorien der Fahrzeuge rekonstruieren, die für die Berechung der Sollwerte für die Regelung herangezogen werden können.

Eine weitere Möglichkeit besteht darin, die Regelung auf Grundlage von Daten eines Fahrzeug-Navigationssystems durchzuführen. Hierzu können z.B. die Daten aus einer digitalen Karte verwendet werden.

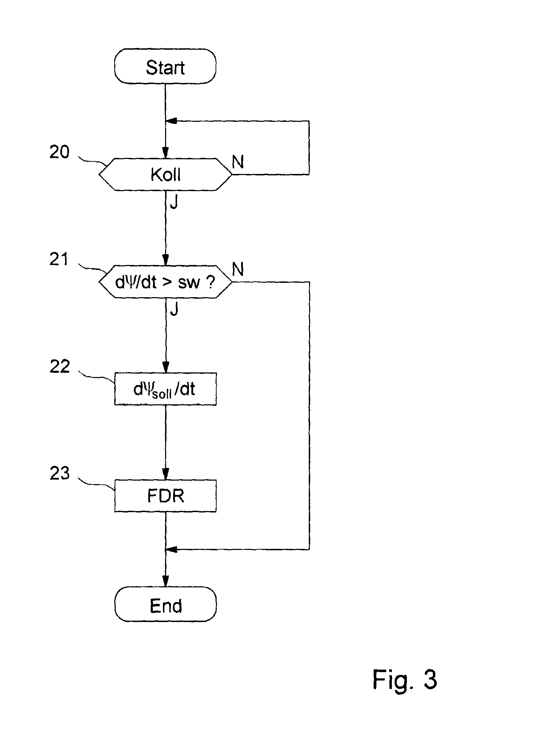

Im Falle einer Kollision ist häufig zu beobachten dass der Fahrer im Affekt falsch reagiert und das Lenkrad z. B. zu stark oder zu schwach einschlägt. Der Regler 4 ist daher so ausgelegt, dass der vom Fahrer vorgegebene Lenkwunsch - der möglicherweise im Affekt der Kollision entstanden ist - nicht oder nur teilweise berücksichtigt wird. Der Regler 4 schaltet bei einer Kollision in einen zweiten Modus, berechnet dann eine Sollgröße, wie z.B. eine Soll-Gierrate dψₛₒₗₗ/dt, die wenigstens teilweise vom Lenkwunsch des Fahrers unabhängig ist, und regelt die Regelgröße (z.B. Gierrate) des Fahrzeugs auf diesen Sollwert. Wahlweise kann auch die Fahrzeug-Querbeschleunigung ay oder der Schwimmwinkel β geregelt werden. Genauere Angaben zur Regelstrategie werden nachfolgend anhand von Fig. 3 erläutert.

Fig. 2 zeigt ein Fahrzeug 9, das sich in seiner Fahrspur 11 in Richtung des Pfeils mit der Geschwindigkeit v bewegt. Das Fahrzeug 9 umfasst ein Airbag-System mit mehreren Drucksensoren 6, die im Türbereich des Fahrzeugs 9 angeordnet sind, und mehreren Beschleunigungssensoren 8, die vorne und hinten seitlich und im Motorraum integriert sind. Die Sensorsignale der Sensoren 6,8 werden im Fahrbetrieb permanent überwacht, um eine Kollision zu erkennen.

Fig. 3 zeigt die wesentlichen Verfahrensschritte eines Verfahrens zum Stabilisieren eines Fahrzeugs nach einer Kollision, wobei eine Gierratenregelung durchgeführt wird. In Schritt 20 werden zunächst die Sensorsignale der Sensoren 6,8 ausgewertet. Im Falle einer Kollision (J) wird außerdem überprüft, ob das Fahrzeug durch den Aufprall in Rotation versetzt worden ist. Hierzu wird in Schritt 21 abgefragt, ob die Gierrate dψ/dt bzw. die Änderung der Gierrate einen vorgegebenen Schwellenwert SW überschreitet.

Die Gierrate dψ/dt wird im vorliegenden Beispiel von einem Gierratensensor 7 (Fig. 2) der ESP-Sensorik 2 gemessen. Das Signal des Gierratensensors 7 kann durch Auswertung der Sensoren 6,8 verifiziert werden.

Wenn die Gierrate dψ/dt bzw. deren Änderung den Schwellenwert SW überschreitet (Fall J), wird in Schritt 22 ein vom aktuellen Lenkradwinkel unabhängiger Sollwert gewählt. Im vorliegenden Beispiel wird die unmittelbar vor der Kollision auftretende Gierrate verwendet. Wahlweise könnte der Sollwert auch aus den Daten der Umfeldsensorik 10 berechnet werden.

In Schritt 23 greift der Stabilisierungsalgorithmus 4 schließlich in den Fahrbetrieb ein und erzeugt ein Giermoment, das der durch die Kollision verursachten Gierbewegung entgegenwirkt. Hierzu bedient sich der Fahrdynamikregler 4 der Radbremsen des Bremssystems 13 und/oder eines Lenkstellers der aktiven Lenkung 14 und/oder des Motormanagements 15.

Darüber hinaus ist der FDR-Algorithmus 4 derart ausgelegt, dass das Fahrzeug 9 in Längsrichtung abgebremst wird. Das Fahrzeug 9 kann dabei teilweise oder vollständig abgebremst werden. Somit ist es möglich, das Fahrzeug wirksam zu stabilisieren und die Gefahr eines Folgeunfalls sowie dessen Schwere zu reduzieren.

**Bezugszeichenliste**

| | |
|---|---|
| 1 | Steuergerät |
| 2 | ESP-Sensorik |
| 3 | Aktuatoren |
| 4 | Fahrdynamikregler |
| 5 | Airbag-Sensoren |
| 6 | Drucksensoren |
| 7 | Gierratensensor |
| 8 | Beschleunigungssensoren |
| 9 | Fahrzeug |
| 10 | Umfeldsensorik |
| 11 | Fahrspur |
| 12 | Fahrspur-Begrenzungsstreifen |
| 13 | Bremssystem |
| 14 | aktive Lenkung |
| 15 | Motormanagement |
| 20-23 | Verfahrensschritte |
| a_{y} | Querbeschleunigung |
| dψ/dt | Gierrate |
| n | Rad-Drehzahl |
| dψₛₒₗₗ/dt | Soll-Gierrate |
| δ | Lenkwinkel |
| p | Bremsdruck |

## Patentansprüche

1. Vorrichtung zum Stabilisieren eines Fahrzeugs (9) nach einer Kollision, umfassend ein Steuergerät (1) mit einem Regelalgorithmus (4) und eine Sensorik (2) zum Aufnehmen verschiedener Fahrzeugbewegungsgrößen (ay,dψ/dt), wobei, die Vorrichtung ferner eine Sensorik (5) zum Erkennen einer Kollision umfasst, **dadurch gekennzeichnet, dass** der Regelalgorithmus (4) im Falle der Enkennung einer Kollision einen Sollwert (ayₛₒₗₗ, dψₛₒₗₗ/dt, βₛₒₗₗ) für eine Fahrzeugbewegungsgröße (ay,dψ/dt) verwendet, der wenigstens teilweise unabhängig vom Lenkwunsch des Fahrers ist, und die Bewegung des Fahrzeugs (9) auf diesen Sollwert (ayₛₒₗₗ, dψₛₒₗₗ/dt, βₛₒₗₗ) regelt,
wobei das Steuergerät (1) auf das Bremssystem (12) und/oder eine aktive Lenkung (13) und/oder eine Motorsteuerung als Aktuator für die Regelung zugreifen kann.

2. Vorrichtung nach Anspruch 1, **dadurch gekennzeichnet, dass** sie einen Aktuator (3) zum Durchführen eines Stabilisierungseingriffs umfasst.

3. Vorrichtung nach Anspruch 1 oder 2, **dadurch gekennzeichnet, dass** der Sollwert (ay_{soll,} dψₛₒₗₗ/dt,βₛₒₗₗ) für die geregelte Fahrzeugbewegungsgröße (ay,dψ/dt,β) ganz unabhängig von dem vom Fahrer eingeschlagenen Lenkradwinkel (δ) ist.

4. Vorrichtung nach einem der vorhergehenden Ansprüche, dadurch dass der Sollwert (ayₛₒₗₗ,dψojl/dt, (3so11) für die geregelte Fahrzeugbewegungsgröße (ay,dψ/dt,β) auf der Grundlage von Daten einer Umfeldsensorik (10) berechnet wird.

5. Vorrichtung nach Anspruch 1, 2 oder 3, **dadurch gekennzeichnet, dass** ein unmittelbar vor der Kollision vorliegender Ist-wert der Fahrzeugbewegungsgröße (ay,dψ/dt,β) als Sollwert (ay-ₛₒₗₗ,dψₛₒₗₗ/dt,βₛₒₗₗ) verwendet wird.

6. Vorrichtung nach einem der vorhergehenden Ansprüche, **dadurch gekennzeichnet, dass** nach dem Erkennen einer Kollision ein automatischer Bremseingriff mit dem Ziel durchgeführt wird, die Fahrzeuglängsgeschwindigkeit (v) erheblich zu reduzieren.

7. Verfahren zum Stabilisieren eines Fahrzeugs (5) nach einer Kollision, wobei
- der Fahrzustand des Fahrzeugs (9) mittels einer Sensorik (2) auf das Auftreten einer Kollision überwacht,
- ein Sollwert (ayₛₒₗₗ,dψₛₒₗₗ/dt,βₛₒₗₗ) für eine Fahrzeugbewegungsgröße (ay,dψ/dt,β) bestimmt wird, der wenigstens teilweise unabhängig vom Lenkwunsch des. Fahrers ist, **dadurch gekennzeichnet, dass**
- die Fahrzeugbewegungsgröße (ay,dψ/dt,β) im Falle der Erkennung einer Kollision durch Stabilisierungseingriffe auf diesen Sollwert (ayₛₒₗₗ,dψₛₒₗₗ/dt,βₛₒₗₗ) geregelt wird,
- wobei zur Stabilisierung mittels des Bremssystems (12) und/oder einer aktive Lenkung (13) und/oder einer Motorsteuerung in den Fahrbetrieb eingegriffen werden kann.

8. Verfahren nach Anspruch 7, **dadurch gekennzeichnet, dass** ein Sollwert für eine Fahrzeugbewegungsgröße (ay,dψ/dt,β) verwendet wird, der vollständig unabhängig vom Lenkwunsch des Fahrers ist.

9. Verfahren nach Anspruch 7 oder 8, **dadurch gekennzeichnet, dass** der Sollwert (ayₛₒₗₗ,dψₛₒₗl/dt,βₛₒₗₗ) der geregelten Fahrzeugbewegungsgröße (ay,dψ/dt,β) auf der Grundlage von Daten einer Umfeldsensorik (10) berechnet wird.

10. Verfahren nach Anspruch 7 oder 8, **dadurch gekennzeichnet, dass** der Sollwert (ayₛₒₗₗ,dψₛₒₗₗ/dt,βₛₒₗₗ) der geregelten Fahrzeugbewegungsgröße (ay,dψ/dt,β) auf Basis der mit Hilfe eines GPS-Systems ermittelten Position und einer digitalen Karte ermittelt wird.

11. Verfahren nach einem der Ansprüche 7 bis 10, **dadurch gekennzeichnet, dass** nach dem Erkennen einer Kollision ein automatischer Bremseneingriff mit dem Ziel durchgeführt wird, die Fahrzeuglängsgeschwindigkeit (v) erheblich zu reduzieren.

12. Verfahren nach einem der vorhergehenden Ansprüche, **dadurch gekennzeichnet, dass** die geregelte Fahrzeugbewegungsgröße (ay,dψ/dt) die Gierrate (dψ/dt), die Quergeschwindigkeit (ay) oder der Schwimmwinkel (β) ist.

## Claims

1. Apparatus for stabilizing a vehicle (9) after a collision, comprising a control unit (1) with a regulating algorithm (4), and a sensor system (2) for recording various vehicle movement variables (ay, dψ/dt), the apparatus comprising, furthermore, a sensor system (5) for detecting a collision, **characterized in that** the regulating algorithm (4), in the case of the detection of a collision, uses a setpoint value (ayₛₒₗₗ, dψₛₒₗₗ/dt, βₛₒₗₗ) for a vehicle movement variable (ay, dψ/dt), which setpoint value (ayₛₒₗₗ, dψₛₒₗₗ/dt, βₛₒₗₗ) is at least partially independent of the steering request of the driver, and regulates the movement of the vehicle (9) to the said setpoint value (ayₛₒₗₗ, dψₛₒₗₗ/dt, βₛₒₗₗ), it being possible for the control unit (1) to access the brake system (12) and/or an active steering system (13) and/or an engine control system as actuator for the regulation.

2. Apparatus according to Claim 1, **characterized in that** it comprises an actuator (3) for carrying out a stabilization intervention.

3. Apparatus according to Claim 1 or 2, **characterized in that** the setpoint value (ayₛₒₗₗ, dψₛₒₗₗ/dt, βₛₒₗₗ) for the regulated vehicle movement variable (ay, dψ/dt, β) is completely independent of the steering-wheel angle (δ) which is set by the driver.

4. Apparatus according to one of the preceding claims, **characterized in that** the setpoint value (ayₛₒₗₗ, dψₛₒₗₗ/dt, βₒₗₗ) for the regulated vehicle movement variable (ay, dψ/dt, β) is calculated on the basis of data of an environment sensor system (10).

5. Apparatus according to Claim 1, 2 or 3, **characterized in that** an actual value of the vehicle movement variable (ay, dψ/dt, β) which exists immediately before the collision is used as setpoint value (ayₛₒₗₗ, dψₛₒₗₗ/dt, βₛₒₗₗ).

6. Apparatus according to one of the preceding claims, **characterized in that**, after the detection of a collision, an automatic braking intervention is carried out with the aim of reducing the vehicle longitudinal speed (v) considerably.

7. Method for stabilizing a vehicle (9) after a collision,
- the driving state of the vehicle (9) being monitored with respect to the occurrence of a collision by means of a sensor system (2),
- a setpoint value (ay_{soll,} dψₛₒₗₗ/dt, βₛₒₗₗ) for a vehicle movement variable (ay, dψ/dt, β) being determined which is at least partially independent of the steering request of the driver, **characterized in that**
- the vehicle movement variable (ay, dψ/dt, β) is regulated to the said setpoint value (ayₛₒₗₗ, dψₛₒₗₗ/dt, βₛₒₗₗ) by stabilization interventions in the case of the detection of a collision,
- it being possible for an intervention in the driving operation to be carried out by means of the brake system (12) and/or an active steering system (13) and/or an engine control system for stabilization purposes.

8. Method according to Claim 7, **characterized in that** a setpoint value for a vehicle movement variable (ay, dψ/dt, β) is used which is completely independent of the steering request of the driver.

9. Method according to Claim 7 or 8, **characterized in that** the setpoint value (ayₛₒₗₗ, dψₛₒₗₗ/dt, βₛₒₗₗ) of the regulated vehicle movement variable (ay, dψ/dt, β) is calculated on the basis of data of an environment sensor system (10).

10. Method according to Claim 7 or 8, **characterized in that** the setpoint value (ayₛₒₗₗ, dψₛₒₗₗ/dt, βₛₒₗₗ) of the regulated vehicle movement variable (ay, dψ/dt, β) is determined on the basis of the position, determined with the aid of a GPS system, and a digital map.

11. Method according to one of Claims 7 to 10, **characterized in that**, after the detection of a collision, an automatic braking intervention is carried out with the aim of reducing the vehicle longitudinal speed (v) considerably.

12. Method according to one of the preceding claims, **characterized in that** the regulated vehicle movement variable (ay, dψ/dt) is the yaw rate (dψ/dt), the transverse speed (ay) or the slip angle (β).

## Revendications

1. Dispositif de stabilisation d'un véhicule (9) après une collision, comprenant un contrôleur (1) doté d'un algorithme de régulation (4) et un dispositif de détection (2) pour collecter différentes grandeurs de déplacement du véhicule (ay, dψ/dt), le dispositif comprenant en outre un dispositif de détection (5) pour détecter une collision, **caractérisé en ce que** l'algorithme de régulation (4), dans le cas de la détection d'une collision, utilise une valeur de consigne (ayₛₒₗₗ, dψₛₒₗₗ/dt, βₛₒₗₗ) pour une grandeur de déplacement du véhicule (ay, dψ/dt), laquelle est au moins partiellement indépendante du souhait de changement de direction du conducteur, et régule le mouvement du véhicule (9) en fonction de cette valeur de consigne (ayₛₒₗₗ, dψₛₒₗₗ/dt, βₛₒₗₗ), le contrôleur (1) pouvant accéder au système de freinage (12) et/ou à une direction active (13) et/ou à une commande de moteur faisant office d'actionneur pour la régulation.

2. Dispositif selon la revendication 1, **caractérisé en ce qu'**il inclut un actionneur (3) pour effectuer l'intervention de stabilisation.

3. Dispositif selon la revendication 1 ou 2, **caractérisé en ce que** la valeur de consigne (ayₛₒₗₗ, dψₛₒₗₗ/dt, βₛₒₗₗ) pour la grandeur de déplacement régulée du véhicule (ay, dψ/dt, β) est totalement indépendante de l'angle du volant de rotation (δ) appliqué par le conducteur.

4. Dispositif selon l'une des revendications précédentes, **caractérisé en ce que** la valeur de consigne (ayₛₒₗₗ, dψₛₒₗₗ/dt, βₛₒₗₗ) pour la grandeur de déplacement régulée du véhicule (ay, dβ/dt, β) est calculée en se basant sur les données d'un dispositif de détection de l'environnement (10).

5. Dispositif selon la revendication 1, 2 ou 3, **caractérisé en ce qu'**une valeur réelle de la grandeur de déplacement du véhicule (ay, dψ/dt, β) présente immédiatement avant la collision est utilisée comme valeur de consigne (ayₛₒₗₗ, dψₛₒₗₗ/dt, βₛₒₗₗ).

6. Dispositif selon l'une des revendications précédentes, **caractérisé en ce qu'**après la détection d'une collision, une intervention sur le frein a automatiquement lieu avec pour objectif de réduire considérablement la vitesse longitudinale du véhicule (v).

7. Procédé de stabilisation d'un véhicule (9) après une collision, selon lequel
- l'état de déplacement du véhicule (9) est surveillé au moyen d'un dispositif de détection (2) afin de détecter la survenance d'une collision,
- une valeur de consigne (ayₛₒₗₗ, dψₛₒₗₗ/dt, βₛₒₗₗ) pour une grandeur de déplacement du véhicule (ay, dψ/dt, β) est déterminée, laquelle est au moins partiellement indépendante du souhait de changement de direction du conducteur,
**caractérisé en ce que**
la grandeur de déplacement du véhicule (ay, dψ/dt, β), dans le cas de la détection d'une collision, est régulée à cette valeur de consigne (ayₛₒₗₗ, dψₛₒₗₗ/dt, βₛₒₗₗ) par des interventions de stabilisation,
- une intervention pouvant avoir lieu dans le régime de déplacement en vue de la stabilisation au moyen du système de freinage (12) et/ou d'une direction active (13) et/ou d'une commande de moteur.

8. Procédé selon la revendication 7, **caractérisé en ce qu'**une valeur de consigne est utilisée pour une grandeur de déplacement du véhicule (ay, dψ/dt, β), laquelle est totalement indépendante du souhait de changement de direction du conducteur.

9. Procédé selon la revendication 7 ou 8, **caractérisé en ce que** la valeur de consigne (ayₛₒₗₗ, dψₛₒₗₗ/dt, βₛₒₗₗ) de la grandeur de déplacement régulée du véhicule (ay, dψ/dt, β) est calculée en se basant sur les données d'un dispositif de détection de l'environnement (10).

10. Procédé selon la revendication 7 ou 8, **caractérisé en ce que** la valeur de consigne (ayₛₒₗₗ, dψₛₒₗₗ/dt, βₛₒₗₗ) de la grandeur de déplacement régulée du véhicule (ay, dψ/dt, β) est déterminée en se basant sur une position déterminée à l'aide d'un système GPS et d'une carte numérique.

11. Procédé selon l'une des revendications 7 à 10, **caractérisé en ce qu'**après la détection d'une collision, une intervention sur le frein a automatiquement lieu avec pour objectif de réduire considérablement la vitesse longitudinale du véhicule (v).

12. Procédé selon l'une des revendications précédentes, **caractérisé en ce que** la grandeur de déplacement régulée du véhicule (ay, dψ/dt) est le taux de lacet (dψ/dt), la vitesse transversale (ay) ou l'angle de flottement (β).
